(19) Europäisches Patentamt
European Patent Office
Office européen des brevets

(11) EP 2 290 343 A2

(12) **EUROPÄISCHE PATENTANMELDUNG**

(43) Veröffentlichungstag:
02.03.2011 Patentblatt 2011/09

(51) Int Cl.:
$G01K\ 11/22^{(2006.01)}$ $\qquad$ $G01S\ 15/08^{(2006.01)}$

(21) Anmeldenummer: 10008353.4

(22) Anmeldetag: 11.08.2010

(84) Benannte Vertragsstaaten:
AL AT BE BG CH CY CZ DE DK EE ES FI FR GB GR HR HU IE IS IT LI LT LU LV MC MK MT NL NO PL PT RO SE SI SK SM TR
Benannte Erstreckungsstaaten:
BA ME RS

(30) Priorität: 27.08.2009 DE 102009039083

(71) Anmelder: Valeo Schalter und Sensoren GmbH
74321 Bietigheim-Bissingen (DE)

(72) Erfinder:
• Rostocki, Paul-David
74177 Bad Friedrichshall (DE)
• Grüdl, Dietmar
71679 Asperg (DE)
• Lill, Anton
74348 Lauffen a.N. (DE)
• Hallek, Michael
71717 Beilstein (DE)

(54) **Verfahren und Anordnung zur Bestimmung der Umgebungstemperatur eines Ultraschallsensors**

(57) Es wird ein Verfahren zur Bestimmung der Umgebungstemperatur eines Ultraschallsensors beschrieben, bei dem zur Bestimmung der Umgebungstemperatur das Schwingungsverhalten eines Ultraschallvibrators des Ultraschallsensors beobachtet und mit einem Referenzschwingungsverhalten verglichen wird, und die Umgebungstemperatur bestimmt wird, indem ausgehend von einer Referenztemperatur die Abweichung des Schwingungsverhaltens von dem Referenzschwingungsverhalten als ein Maß für die Abweichung der Umgebungstemperatur von der Referenztemperatur verwendet wird.

Fig. 1

EP 2 290 343 A2

**Beschreibung**

Stand der Technik

Die Erfindung betrifft ein Verfahren und eine Anordnung zur Bestimmung der Umgebungstemperatur eines Ultraschallsensors gemäß dem Oberbegriff des Anspruchs 1.

Zur Umfelderkennung von Kraftfahrzeugen, kurz Fahrzeuge, wie etwa zur Abstandsmessung zu beispielsweise während eines Einparkvorgangs vor und/oder seitlich neben und/oder hinter einem Fahrzeug befindlichen Objekten, sind Ultraschallsensoren hinlänglich bekannt. Sie weisen mindestens eine mit der Umgebungsluft in Verbindung stehende, auch als aktive Oberfläche bezeichnete Membran eines Ultraschallvibrators auf, über die durch Anregung mittels eines mit der Membran verbundenen Aktors des Ultraschallvibrators mit einer vorgegebenen Anregefrequenz Ultraschallwellen ausgesendet, sowie bei manchen Ausführungen auch deren von Objekten reflektierte Echos empfangen werden. Bei anderen Ausführungen kann zum Empfang der Echos eine separate Einheit vorgesehen sein. Allgemein bekannt ist beispielsweise die mit ihrer Membran erkennbare Anordnung von Ultraschallsensoren, mit denen Abstände zu vor oder hinter einem Fahrzeug befindlichen Objekten gemessen werden sollen, in der vorderen bzw. hinteren Stoßstange eines Fahrzeugs.

Da für die Schallgeschwindigkeit c nach den Gesetzen der Thermodynamik gemäß der kinetischen Gastheorie

$$c = \sqrt{\kappa \cdot R \cdot T}$$

gilt, mit der Temperatur T, dem Adiabatenexponenten $\kappa$ des Gases bzw. des Gasgemischs und der spezifischen Gaskonstanten R mit

$$R = \frac{\Re}{M},$$

wobei $\Re$ die allgemeine Gaskonstante und M die molare Masse des Gases bzw. die mittlere molare Masse des Gasgemischs sind, ist aufgrund der sich hieraus ergebenden Änderung der Schalgeschwindigkeit c mit der Temperatur T des Gases bzw. des Gasgemischs für eine zuverlässige Bestimmung der zur Abstandsmessung verwendeten Schalllaufzeit eine Bestimmung der Umgebungstemperatur des Fahrzeugs unerlässlich.

Die Umgebungstemperatur kann dann entweder unmittelbar in die Berechnung des Abstands einfließen, oder zur Korrektur der Berechnung verwendet werden.

Bisher wird die Umgebungstemperatur vom Fahrzeug zur Verfügung gestellt. Hierzu ist mindestens ein eigens hierfür vorgesehener, am bzw. im Fahrzeug verbauter Temperatursensor vorgesehen, der die Temperatur an seinem Einbauort erfasst.

Nachteilig hieran ist, dass nicht jedes Fahrzeug werkseitig mit einem Temperatursensor ausgestattet ist, was z. B. bei einem nachträglichen Einbau von Ultraschallsensoren zur Abstandsmessung, beispielsweise in Form einer Einparkhilfe, auch den zusätzlichen Einbau eines Temperatursensors zur Folge hat. Dies ist mit empfindlichen Mehrkosten verbunden.

Darüber hinaus ist in den meisten Fahrzeugen nur ein Temperatursensor verbaut, verbunden mit dem Nachteil, dass nicht sichergestellt werden kann, dass die am Einbauort des Temperatursensors gemessene Temperatur tatsächlich der Umgebungstemperatur entspricht. Ein anschauliches Beispiel ist ein Fahrzeug, in dessen vorderer Stoßstange ein Temperatursensor eingebaut ist. Steht beispielsweise diese Stoßstange in der Sonne, so gibt der Temperatursensor eine zu hohe Umgebungstemperatur für einen in der im Schatten stehenden hinteren Stoßstange eingebauten Ultraschallsensor an. Befindet sich die vordere Stoßstange im Schatten und die hintere in der Sonne zeigt der Temperatursensor umgekehrt eine zu niedrige Umgebungstemperatur an.

Durch DE 34 00 785 A1 ist bekannt, die Umgebungstemperatur bei der Abstandsmessung mittels eines Ultraschallsensors zu berücksichtigen.

Um bei niedrigen Umgebungstemperaturen eine Beeinträchtigung der Membran eines Ultraschallsensors durch Eis und Schnee auszuschließen, ist durch DE 10 2005 045 019 A1 bekannt, dass der Ultraschallsensor ein Heizelement zum Beheizen der Membran aufweist. Ein im Bereich der Membran angeordneter Temperatursensor kann der Erfassung der Umgebungstemperatur dienen. Diese kann ausgewertet werden, um eine Beeinflussung der Schallgeschwindigkeit zu berücksichtigen.

Um drüber hinaus auch temperaturabhängige Eigenschaften eines Ultraschallvibrators eines Ultraschallsensors zu kompensieren ist durch DE 35 38 964 C2 bekannt, in einem dem Ultraschallvibrator vorgeschalteten, induktive und/oder kapazitive und/oder ohmsche Bauelemente umfassenden Schaltkreis temperaturabhängige Bauelemente vorzusehen, die in den Ultraschallvibrator integriert und thermisch mit der Membran des Ultraschallvibrators gekoppelt sind.

Als eine Aufgabe der Erfindung kann es angesehen werden, ein Verfahren zu entwickeln, mit dem mit möglichst geringem Aufwand eine Bestimmung der Umgebungstemperatur eines Ultraschallsensors möglich ist.

Offenbarung der Erfindung

Die Aufgabe wird gelöst durch ein Verfahren mit den Merkmalen des Anspruchs 1.

Demnach zeichnet sich ein Verfahren zur Bestimmung der Umgebungstemperatur eines Ultraschallsensors dadurch aus, dass das Schwingungsverhalten eines Ultraschallvibrators eines Ultraschallsensors beobachtet und mit einem Referenzschwingungsverhalten verglichen wird, wobei die Umgebungstemperatur bestimmt wird, indem ausgehend von einer Referenztemperatur die Abweichung bzw. der Grad der Abweichung des Schwingungsverhaltens von dem Referenzschwingungsverhalten als ein Maß für die Abweichung der Umgebungstemperatur von der Referenztemperatur verwendet wird.

Die Erfindung nutzt den Umstand, dass sich neben der Schallgeschwindigkeit auch das Schwingungsverhalten des Ultraschallvibrators eines Ultraschallsensors temperaturabhängig verändert.

Das Schwingungsverhalten kann beispielsweise durch Messung der Sende-und/oder Empfangsfrequenz des Ultraschallsensors bzw. dessen Ultraschallvibrators erfasst werden.

Vorteile der Erfindung gegenüber dem Stand der Technik ergeben sich unter anderem dadurch, dass dadurch eine Bestimmung der Umgebungstemperatur bzw. eine Temperaturerfassung direkt am Ultraschallsensor möglich ist. Die Erfindung ermöglicht so eine Temperaturmessung mit Hilfe eines Ultraschallsensors. Ein zusätzlicher Temperatursensor bzw. ein zusätzliches Temperaturmesselement ist gegenüber dem Stand der Technik nicht erforderlich. Außerdem ergibt sich so die Möglichkeit, eine durch das erfindungsgemäße Verfahren bestimmte Temperatur einer Stoßstange, sogar einzelnen Stellen einer Stoßstange zuzuordnen.

Das Schwingungsverhalten kann während einer Anregung des Ultraschallvibrators oder im Anschluss an eine Anregung des Ultraschallvibrators beobachtet werden. Ebenfalls sind Kombinationen denkbar, bei denen das Schwingungsverhalten sowohl während einer Anregung, als auch im Anschluss hieran beobachtet wird. Auch kann eine Beobachtung im Anschluss an eine Anregung erst nach einer vorgebbaren Zeitspanne nach dem Ende der Anregung erfolgen.

Zum Vergleich des Schwingungsverhaltens und des Referenzschwingungsverhaltens kann die Abweichung bzw. der Grad der Abweichung beispielsweise als ein Quotient von Schwingungsverhalten und Referenzschwingungsverhalten oder als eine Differenz von Schwingungsverhalten und Referenzschwingungsverhalten berechnet werden.

Wenn z. B. das Referenzschwingungsverhalten der Divisor des Quotienten ist und das Schwingungsverhalten den Dividend des Quotienten bildet, ist der Quotient kleiner als 1, wenn das beobachtete Schwingungsverhalten unterhalb des Referenzschwingungsverhaltens liegt. Der Quotient ist größer 1, wenn das beobachtete Schwingungsverhalten oberhalb des Referenzschwingungsverhaltens liegt. Im Falle eines Quotienten mit dem Referenzschwingungsverhalten als Dividend und dem Schwingungsverhalten als Divisor sind die Verhältnisse genau umgekehrt. Wird beispielsweise eine Differenz gebildet, kann das Vorzeichen als Maß dafür herangezogen werden, ob das beobachtete Schwingungsverhalten ober- oder unterhalb des Referenzschwingungsverhaltens liegt.

Die Umgebungstemperatur kann durch beispielsweise gewichtete Multiplikation des Quotienten von Schwingungsverhalten und Referenzschwingungsverhalten mit der Referenztemperatur berechnet werden.

Besonders bevorzugt liegt dem Referenzschwingungsverhalten die Referenztemperatur zu Grunde, wobei der Ultraschallvibrator bei der Referenztemperatur das Referenzschwingungsverhalten aufweist. Dies vereinfacht die Bestimmung der Umgebungstemperatur ausgehend von der Referenztemperatur durch Vergleich von Referenzschwingungsverhalten und beobachtetem Schwingungsverhalten erheblich.

Die Referenztemperatur kann beispielsweise dem Tripelpunkt des Wassers oder der Temperatur bei Normbedingungen entsprechen.

Auch kann dem Referenzschwingungsverhalten ein Referenzumgebungsdruck zu Grunde liegen, wobei der Ultraschallvibrator bei dem Referenzumgebungsdruck das Referenzschwingungsverhalten aufweist. Beispielsweise kann der Referenzumgebungsdruck dem Druck bei Normbedingungen entsprechen.

Zur Beobachtung des Schwingungsverhaltens wird besonders bevorzugt eine Schwingungsfrequenz des Ultraschallvibrators gemessen. Hierbei umfasst das Referenzschwingungsverhalten eine Referenzschwingungsfrequenz bzw. ist durch eine Referenzschwingungsfrequenz gegeben. Als Referenzschwingungsfrequenz kann beispielsweise eine Resonanzfrequenz des Ultraschallvibrators bei einer vorgegebenen Temperatur herangezogen werden. Die vorgegebene Temperatur entspricht vorzugsweise der Referenztemperatur.

Gemäß einer besonders bevorzugten Ausgestaltung der Erfindung ist die Umgebungstemperatur niedriger als die Referenztemperatur, wenn die Schwingungsfrequenz höher als die Referenzschwingungsfrequenz ist, wobei wenn die Schwingungsfrequenz niedriger als die Referenzschwingungsfrequenz ist, die Umgebungstemperatur höher als die Referenztemperatur ist und wenn die Schwingungsfrequenz gleich der Referenzschwingungsfrequenz ist, die Umgebungstemperatur der Referenztemperatur entspricht.

Die Bestimmung der Umgebungstemperatur erfolgt vorzugsweise mit einer zumindest drei diskreten Umgebungstemperaturbereichen entsprechenden Auflösung, einem ersten, der Referenztemperatur entsprechenden Umgebungstemperaturbereich, einem zweiten, einer höheren Umgebungstemperatur als der Referenztemperatur entsprechenden Umgebungstemperaturbereich und einem dritten, einer niedereren Temperatur als der Referenztemperatur entsprechenden Umgebungstemperaturbereich.

Die Temperaturen werden vorzugsweise in °K vorgegeben bzw. bestimmt. Dies vereinfacht die Berechnung der Umgebungstemperatur ausgehend von der Referenztemperatur anhand des Grads einer Abweichung des Schwingungsverhaltens von dem Referenzschwingungsverhalten.

Kurze Beschreibung der Zeichnung

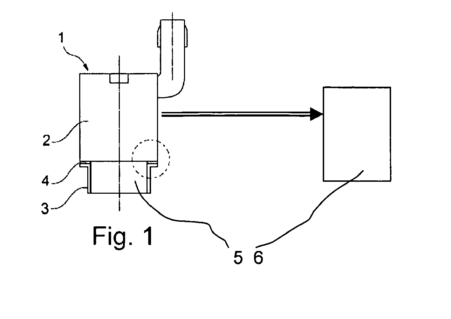

Die Erfindung wird nachfolgend anhand eines Ausführungsbeispiels näher erläutert, wobei Figur 1 eine Anordnung zur Erfassung der Temperatur und der Sende-und Empfangsfrequenz zeigt.

Weg zur Ausführung der Erfindung

Ein erfindungsgemäßes Verfahren zur Bestimmung der Umgebungstemperatur eines Ultraschallsensors bei einem Ultraschallwandler 1 nach Figur 1 sieht vor, dass zur Bestimmung der Umgebungstemperatur zunächst das Schwingungsverhalten eines Ultraschallvibrators des Ultraschallsensors beispielsweise während und/oder nach einer Anregung des Ultraschallvibrators beobachtet wird. Der Ultraschallwandler 1 ist dabei mechanisch in herkömmlicher Weise mit einem Gehäuse 2, Entkopplungselementen 3 und 4 und einer Membran 5 in Form eines Aluminiumtopfes aufgebaut.

Anschließend wird dieses beobachtete Schwingungsverhalten mit einem Referenzschwingungsverhalten bei einer Referenztemperatur in einer Messanordnung 6 verglichen. Die Umgebungstemperatur wird daraufhin bestimmt, indem die Abweichung des Schwingungsverhaltens von dem Referenzschwingungsverhalten als ein Maß für die Abweichung der Umgebungstemperatur von der Referenztemperatur verwendet wird.

Dem Referenzschwingungsverhalten liegt dabei vorzugsweise die Referenztemperatur zu Grunde. Dabei weist der Ultraschallvibrator bei der Referenztemperatur das Referenzschwingungsverhalten auf.

Zur Beobachtung des Schwingungsverhaltens wird besonders bevorzugt die Schwingungsfrequenz des Ultraschallvibrators gemessen. Hierbei ist das Referenzschwingungsverhalten durch eine Referenzschwingungsfrequenz gegeben. Die Erfindung macht sich dabei den Umstand zu Nutze, dass der Ultraschallvibrator eines Ultraschallsensors ebenfalls von der Umgebungstemperatur beeinflusst wird. Der Ultraschallvibrator besteht beispielsweise aus einem Aluminium Topf mit einer Piezoscheibe und Dampfungsmaterial. Die Piezoscheibe bildet dabei sowohl die Membran, als auch den die Membran antreibenden Aktor des Ultraschallvibrators. Die Piezoscheibe besteht aus einem Piezomaterial, das bei Anlegen einer äußeren elektrischen Spannung eine geeignete mechanische Reaktion, beispielsweise eine Kontraktion oder eine Ausdehnung zeigt. Bei Wegnahme der elektrischen Spannung erfolgt die umgekehrte mechanische Reaktion.

Das Schwingungsverhalten kann beispielsweise durch Messung der Sende-und/oder Empfangsfrequenz des Ultraschallsensors bzw. dessen Ultraschallvibrators erfasst werden. Sende- und/oder Empfangsfrequenz bei Umgebungstemperatur entsprechen hierbei der Schwingungsfrequenz bzw. dem Schwingungsverhalten, wobei Sende und/oder Empfangsfrequenz beispielsweise bei Referenztemperatur der Referenzschwingungsfrequenz bzw. dem Referenzschwingungsverhalten entsprechen. Die Veränderung der Sende und/oder Empfangsfrequenz durch unterschiedliche Umgebungstemperaturen kann einer entsprechenden Umgebungstemperatur zugeordnet werden.

Beispielsweise bedeutet eine höhere Sende-und/oder Empfangsfrequenz als die Referenzschwingungsfrequenz eine niedrigere Umgebungstemperatur als die Referenztemperatur, beispielsweise 20°C, und eine niedrigere Sende- und/oder Empfangsfrequenz als die Referenzschwingungsfrequenz eine höhere Umgebungstemperatur als die Referenztemperatur, beispielsweise 20°C.

**Patentansprüche**

1. Verfahren zur Bestimmung der Umgebungstemperatur eines Ultraschallsensors, **dadurch gekennzeichnet, dass** das Schwingungsverhalten eines Ultraschallvibrators des Ultraschallsensors beobachtet und mit einem Referenzschwingungsverhalten verglichen wird, wobei die Umgebungstemperatur bestimmt wird, indem ausgehend von einer Referenztemperatur die Abweichung des Schwingungsverhaltens von dem Referenzschwingungsverhalten als ein Maß für die Abweichung der Umgebungstemperatur von der Referenztemperatur verwendet wird.

2. Verfahren nach Anspruch 1, **dadurch gekennzeichnet, dass** das Schwingungsverhalten während oder im Anschluss einer Anregung des Ultraschallvibrators beobachtet wird.

3. Verfahren nach Anspruch 1 oder 2, **dadurch gekennzeichnet, dass** zum Vergleich des Schwingungsverhaltens und des Referenzschwingungsverhaltens die Abweichung als ein Quotient von Schwingungsverhalten und Referenzschwingungsverhalten berechnet wird, wobei insbesondere die Umgebungstemperatur durch Multiplikation des Quotienten mit der Referenztemperatur berechnet wird.

4. Verfahren nach Anspruch 1 oder 2, **dadurch gekennzeichnet, dass** zum Vergleich des Schwingungsverhaltens und des Referenzschwingungsverhaltens die Abweichung als eine Differenz von Schwingungsverhalten und Referenzschwingungsverhalten berechnet wird, wobei insbesondere dem Referenzschwingungsverhalten die Referenztemperatur zugrunde liegt.

5. Verfahren nach einem der vorhergehenden Ansprüche, **dadurch gekennzeichnet, dass** die Referenztemperatur dem Tripelpunkt des Wassers oder der Temperatur bei Normbedingungen entspricht.

6. Verfahren nach einem der vorhergehenden Ansprüche, **dadurch gekennzeichnet, dass** dem Referenzschwingungsverhalten ein Referenzumgebungsdruck zugrunde liegt und der Referenzumgebungsdruck dem Druck bei Normbedingungen entspricht.

7. Verfahren nach einem der vorhergehenden Ansprüche, **dadurch gekennzeichnet, dass** zur Beobachtung des Schwingungsverhaltens eine Schwingungsfrequenz des Ultraschallvibrators gemessen wird und das Referenzschwingungsverhalten eine Referenzschwingungsfrequenz umfasst.

8. Verfahren nach Anspruch 7, **dadurch gekennzeichnet, dass** als Referenzschwingungsfrequenz eine Resonanzfrequenz des Ultraschallvibrators herangezogen wird.

9. Verfahren nach Anspruch 7 oder 8, **dadurch gekennzeichnet, dass** wenn die Schwingungsfrequenz höher als die Referenzschwingungsfrequenz ist, die Umgebungstemperatur niedriger als die Referenztemperatur ist, wobei wenn die Schwingungsfrequenz niedriger als die Referenzschwingungsfrequenz ist, die Umgebungstemperatur höher als die Referenztemperatur ist und wenn die Schwingungsfrequenz gleich der Referenzschwingungsfrequenz ist, die Umgebungstemperatur der Referenztemperatur entspricht.

10. Verfahren nach einem der vorhergehenden Ansprüche, **dadurch gekennzeichnet, dass** die Umgebungstemperatur zumindest in drei Umgebungstemperaturbereichen bestimmt wird, einem ersten, der Referenztemperatur entsprechenden Umgebungstemperaturbereich, einem zweiten, einer höheren Umgebungstemperatur als der Referenztemperatur entsprechenden Umgebungstemperaturbereich und einem dritten, einer niedereren Temperatur als der Referenztemperatur entsprechenden Umgebungstemperaturbereich.

11. Anordnung zur Durchführung eines Verfahrens nach einem der vorhergehenden Ansprüche, **dadurch gekennzeichnet, dass** einem Ultraschallsensor innerhalb eines Ultraschallwandlers (1), bestehend aus einem Aluminiumtopf (5) und einer Piezoscheibe mit Dämpfungsmaterial eine Messanordnung (6) für die Temperatur und die Sende- und Empfangsfrequenz zugeordnet ist.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3400785 A1
- DE 102005045019 A1
- DE 3538964 C2